Europäisches Patentamt

European Patent Office

Office européen des brevets

(11) Veröffentlichungsnummer: **0 221 314**

A2

(12) # EUROPÄISCHE PATENTANMELDUNG

(21) Anmeldenummer: **86113057.3**

(22) Anmeldetag: **23.09.86**

(51) Int. Cl.⁴: **H 02 P 7/638**

(30) Priorität: **02.10.85 DE 3535144**

(43) Veröffentlichungstag der Anmeldung:
**13.05.87 Patentblatt 87/20**

(84) Benannte Vertragsstaaten:
**AT BE CH FR GB IT LI NL SE**

(71) Anmelder: **Karl M. Reich, Maschinenfabrik GmbH
Kisslingstrasse 1 Postfach 1740
D-7440 Nürtingen(DE)**

(72) Erfinder: **Raichle, Dieter
Reudernerstrasse 109
D-7440 Nürtingen 9(DE)**

(54) **Elektrowerkzeug mit Drehzahlabsenkung.**

(57) Bei einem Elektrowerkzeug (1) wird die Drehzahl im Leerlauf zur Reduzierung des Arbeitsgeräusches abgesenkt. Dazu ist ein Tastschalter (7) vorgesehen, der beim Aufsetzen des Elektrowerkzeuges (1) auf das Werkstück (4) betätigbar ist und den Elektro-motor (3) auf seine volle Drehzahl schaltet.

Das Werkzeug, also z.B. das Sägeblatt (2), erhält damit eine hohe Schwungenergie, die beim Eingriff in das Werkstück (4) zur Verfügung steht und von Anfang an eine hohe Schnittleistung ermöglicht.

Fig.1

Croydon Printing Company Ltd.

EP 0 221 314 A2

Karl M. Reich Maschinenfabrik GmbH, 7440 Nürtingen

Elektrowerkzeug mit Drehzahlabsenkung

Zur Reduzierung der Geräuscherzeugung bei Elektrowerkzeugen ist es bekannt, die Drehzahl im Leerlauf auf einen geringeren Wert abzusenken. Dabei ist ein Stromsensor vorgesehen, der bei Eingriff des Werkzeuges die erhöhte Stromaufnahme registriert und die Motorspannung über verschiedene elektronische Bausteine und Regelelemente zur Erzielung der Arbeitsdrehzahl anhebt.

Neben einem erheblichen Aufwand an elektronischen Bausteinen und damit Verteuerung des Elektrowerkzeuges besteht bei dieser bekannten Ausführung vor allem der Nachteil, daß das Werkzeug erst bei seinem Eingriff auf seine volle Spannung geschaltet wird. Es ist damit eine hohe Leistungsaufnahme und damit ein verhältnismäßig hoher Strom verbunden.

Ein weiterer Nachteil besteht darin, daß der Motor leicht ins Kippmoment geraten kann, so daß der Elektromotor durch zu hohe Erwärmung der Wicklung ausfällt.

Auch können Schwierigkeiten bei der Funkentstörung auftreten und zur Kühlung der elektrischen Bausteine ist ein hoher Aufwand nötig.

Aufgabe der vorliegenden Erfindung ist daher die Schaffung einer Drehzahlabsenkung der eingangs genannten Art mit möglichst einfachen Mitteln, die eine möglichst geringe Stromerhöhung aufweist.

Diese Aufgabe wird erfindungsgemäß durch das im kennzeichnenden Teil des Anspruchs 1 angegebene Merkmal gelöst.

Durch die Verwendung eines Tastschalters zur Betätigung des Elektronikelements ergibt sich ein einfacher und billiger Aufbau der Drehzahlabsenkung.

Bereits beim Aufsetzen des Elektrowerkzeugs auf das Werkstück wird der Elektromotor bzw. das Arbeitswerkzeug von seiner reduzierten Drehzahl von etwa 3800 U/min auf seine volle Leerlaufdrehzahl von etwa 5600 U/min geschaltet. Das Werkzeug, also z.B. das Sägeblatt, erhält damit eine hohe Schwungenergie, die beim Eingriff ins Werkstück zur Verfügung steht und von Anfang an eine wirkungsvolle Zerspanung gewährleistet. Ohne wesentlich erhöhten Strom steht also sofort eine hohe Schnittleistung zur Verfügung.

Die Erfindung läßt sich besonders vorteilhaft einsetzen, wenn das Arbeitswerkzeug eine verhältnismäßig große Masse aufweist. Dies ist z.B. bei Handkreissägen und Handhobeln der Fall. Eine Verwendung ist jedoch auch bei Oberfräsen und Bandschleifern möglich.

Das Elektronikelement kann in bekannter Weise als Widerstand, Diode oder Phasenschnittsteuerung ausgeführt sein.

Wird die Erfindung bei einer Handkreissäge mit schwenkbarer Schutzhaube angewendet, so läßt sich diese zur Betätigung des Tastschalters verwenden. Der Motor enthält dann seine volle Drehzahl, solange die Handkreissäge das Werkstück berührt.

Ist die Handkreissäge als Eintauchsäge ausgebildet, so kann der Tastschalter an der Führungsplatte angeordnet sein und wird vom Gehäuse des Elektromotors betätigt, das gegen die Führungsplatte in Richtung Werkstück verschoben wird.

Es ist jedoch auch eine direkte Betätigung des Tastschalters von Hand möglich.

Im folgenden ist ein Ausführungsbeispiel der Erfindung unter Bezugnahme auf die Zeichnungen näher beschrieben.

Es zeigen:

Fig. 1  Handkreissäge mit Tastschalter, von der Seite

Fig. 2  Schaltbild für die Drehzahlabsenkung

Das Elektrowerkzeug 1 ist hier eine Handkreissäge, deren Sägeblatt 2 von einem Elektromotor 3 antreibbar ist. Zum Aufsetzen auf ein Werkstück 4 dient eine Führungsplatte 5.  Das Sägeblatt 2 wird durch eine schwenkbare Schutzhaube 6 abgedeckt, die sich beim Ansetzen der Handkreissäge an das Werkstück 4 im Gegenuhrzeigersinn verschwenkt.

An der Führungsplatte 5 ist in der Nähe der schwenkbaren Schutzhaube 6 ein Tastschalter 7 befestigt, dessen Taststift 8 von einer Rippe 9 der Schutzhaube 6 betätigbar ist.

Der Elektromotor 3 wird von Hand durch einen Betätigungsschalter 10 aus- und eingeschaltet.

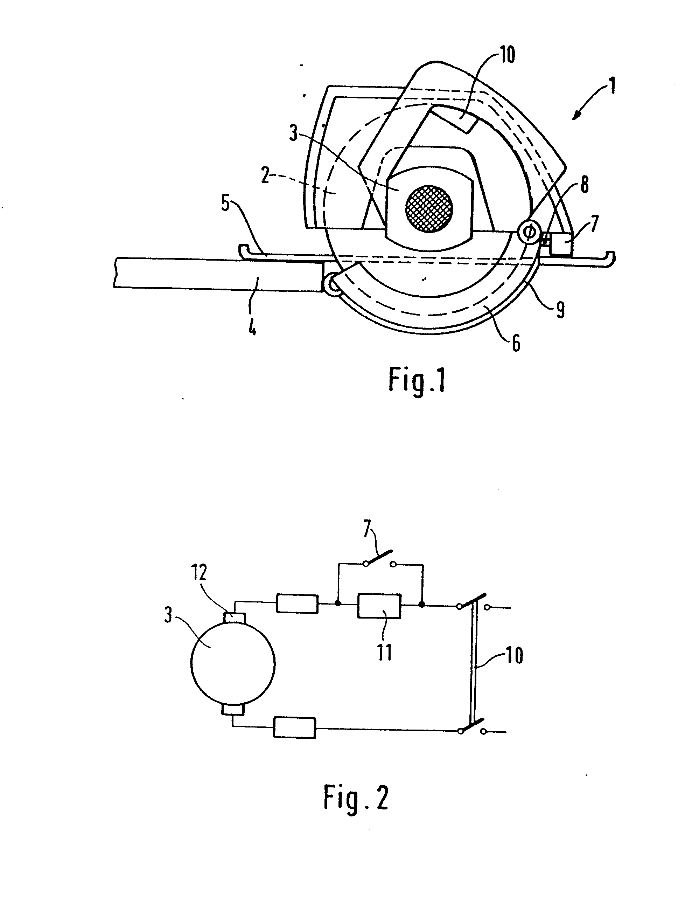

Wie das Schaltbild in Fig. 2 zeigt, liegt das Elektronikelement 11, hier eine Phasenanschnittsteuerung, in Reihe mit der Feldwicklung 12 von Elektromotor 3.

Parallel zu Elektronikelement 11 liegt der Tastschalter 7.

Nach Einschalten des Elektrowerkzeugs über Betätigungsschalter 10 erhält Elektromotor 3 über das Elektronikelement 11 zunächst eine reduzierte Spannung, so daß der Motor nur mit einer reduzierten Drehzahl läuft.

Nach Ansetzen der Handkreissäge an das Werkstück 4 wird die Schutzhaube 6 im Gegenuhrzeigersinn verschwenkt und betätigt Tastschalter 7. Dieser wird geschlossen und überbrückt das Elektronikelement 11, der Elektromotor 3 erhält damit volle Spannung und läuft auf seine volle Leerlaufdrehzahl hoch, so daß beim Ansetzen an das Werkstück die volle Schwungenergie des Sägeblattes 2 zur Verfügung steht.

Der Tastschalter 7 läßt sich natürlich auch an der dem Werkstück 4 zugewandten vorderen Kante der Führungsplatte 5 anordnen und direkt vom Werkstück 4 betätigen. Damit steht noch eine längere Zeit zur Erreichung der vollen Schwungenergie für das Sägeblatt 2 zur Verfügung.

Patentansprüche

1) Elektrowerkzeug mit Drehzahlabsenkung mit einem Fühler
   zur Betätigung eines die Motorspannung beeinflussenden
   Elektronikelements, g e k e n n z e i c h n e t   d u r c h
   einen am Elektrowerkzeug (1) angeordneten Tastschalter (7),
   durch den das Elektronikelement (11) betätigbar ist.

2) Elektrowerkzeug nach Anspruch 1, d a d u r c h   g e -
   k e n n z e i c h n e t , daß der Tastschalter (7) an
   der Führungsplatte (5) des Elektrowerkzeugs (1) angeordnet
   und beim Ansetzen des Elektrowerkzeugs (1) an das Werkstück
   (4) betätigbar ist.

3) Elektrowerkzeug nach Anspruch 2 , d a d u r c h   g e -
   k e n n z e i c h n e t , daß bei einer Handkreissäge (1)
   mit schwenkbarer Schutzhaube (6) der Tastschalter (7) von
   der Schutzhaube (6) betätigbar ist.

4) Elektrowerkzeug nach einem der Ansprüche 1 bis 3, d a -
   d u r c h   g e k e n n z e i c h n e t , daß das Elektronikelement (11) in Reihe mit der Feldwicklung (12) des Elektromotors (3) geschaltet ist und nach Betätigung des Tastschalters (7) überbrückt wird.

Fig.1

Fig.2